# EUROPEAN PATENT SPECIFICATION

(11) **EP 3 053 791 B1**
(45) Date of publication and mention of the grant of the patent: **12.09.2018**
(21) Application number: 16151892.3
(22) Date of filing: 19.01.2016
(51) Int. Cl.: B60S 1/38, B29C 70/34, B29C 70/44, B29C 70/54, B60S 1/40, B60S 1/52

(54) **METHOD FOR MANUFACTURING WINDSHIELD WIPER BOWS AND WINDSHIELD WIPER ARM TERMINAL, BRUSH ADAPTER AND COUPLING ASSEMBLY**
VERFAHREN ZUR HERSTELLUNG VON SCHEIBENWISCHERBÖGEN UND SCHEIBENWISCHERARMANSCHLUSS, BÜRSTENADAPTER UND KUPPLUNGSANORDNUNG
PROCÉDÉ DE FABRICATION DE BRANCHES D'ESSUIE-GLACE ET BRAS D'ESSUIE-GLACE TERMINAL, ADAPTATEUR DE BROSSE ET ENSEMBLE D'ACCOUPLEMENT

(30) Priority: 04.02.2015 ES 201530138
(43) Date of publication of application: 10.08.2016
(73) Proprietor: Doga S.A., 08630 Abrera (ES)
(72) Inventor: ALCAINE SANTAMARÍA, Manuel, 08630 ABRERA (ES); BIOSCA MUNTS, Josep, 08630 ABRERA (ES); CHICÓN MONTOYA, Carlos, 08630 ABRERA (ES); LUQUE PINEDA, Antonio, 08630 ABRERA (ES)
(74) Representative: Ponti & Partners, S.L.P

(56) References cited:
- EP-A1- 1 403 156
- WO-A1-91/06451
- WO-A1-02/053421
- DE-A1- 3 639 537
- DE-A1- 19 813 230
- DE-A1- 19 860 586
- DE-A1-102013 208 576
- US-A1- 2006 059 647

## Description

The present invention relates to a method for manufacturing windshield wiper bows whereby bows made from composite material having superior features to those of existing bows are obtained.

### Background of the invention

The use of composite materials, replacing metal, for manufacturing windshield wiper bows has been described, as they give very good results in aspects such as elasticity, torsion resistance or weight.

The usual method for obtaining these bows is based on the use of moulds having the final bow shape. It is a slow, costly method that does not offer good results in terms of torsion resistance. DE-A-19813230 shows an example of the prior art. The terms "flexor" and "bow", which is the structural component that gives the windshield wiper its curved shape, are used indistinctly in the present description.

### Description of the invention

The aforementioned drawbacks can be solved by means of the method of the invention, which has other advantages that will be described below.

To this end, a method for manufacturing windshield wipers bows is proposed, comprising the stages of:
- arranging a plurality of fibreglass twill fabric layers pre-impregnated with epoxy resin, also known as epoxy resin matrix system, in the lower mould of an autoclave, with a view to obtaining the desired final thickness, said lower mould being a curved surface according to a first horizontal direction, such that this surface has a constant cross-section when seen from the horizontal direction perpendicular to the first direction;
- carrying out a thermocompression operation in the autoclave to obtain a composite material semi-product arranged in layers;
- removing the semi-product from the autoclave; and
- cutting the semi-product according to directions parallel to the direction of curvature of the semi-product to obtain a plurality of flexors.

The inventors observed that, in this manner, the bow obtained has the desired elastic characteristics. Also, on being carried out in an autoclave, low temperatures are used, which makes it possible to use plastic laminates arranged between the semi-product and the mould. Furthermore, various units are obtained in a single process.

According to various optional characteristics of the invention, which can be combined whenever possible:
- thermocompression is carried out at a temperature comprised between 65°C and 140°C, i.e. at a temperature lower than that used in traditional moulding;
- preferably, the fibreglass twill fabric is a 2x2 twill with 300 and 600 tex filaments having a weight comprised between 300 and 600 g/m2 and a thickness is comprised between 0.06 mm and 0.8 mm;
- the fibreglass twill fabric comes from a roll having a width greater than 1 m;
- the epoxy resin has low viscosity and a low curing temperature;
- prior to arranging the fabric and the resin and after having arranged them, corresponding anti-adherent plastic sheets are arranged to facilitate their removal after the thermocompression stage. This is possible due to carrying out the method in an autoclave;
- in the cutting stage, central side projections are left for fixing the bow to a windshield wiper brush support; and
- advantageously, the cutting stage is carried out using a diamond bur.

The invention also relates to a method for manufacturing a bow-windshield wiper rubber support profile assembly, which comprises manufacturing a bow using the method according to any of the aforementioned variants and which comprises bonding the bow to a windshield wiper rubber support profile.

Preferably, the bonding is performed using a two-sided adhesive tape.

Advantageously, the two-sided adhesive tape has three layers: a first acrylic adhesive layer, an internal layer of acrylic viscoelastic and a second layer of acrylic adhesive, wherein the first layer is intended for being bonded to the bow and the second layer is intended for being bonded to the support profile.

Preferably, the adhesive tape is a viscoelastic acrylic foam tape.

Also advantageously, prior to executing the bonding with the two-sided adhesive tape, an adhesion promoter is applied to the surfaces to be bonded.

Lastly, the adhesion promoter is preferably an isopropyl alcohol solution.

The invention also relates to an assembly comprising a windshield wiper arm terminal, brush adapter, windshield wiper bow and coupling assembly, wherein the coupling is intended for being coupled to one side of the bow and on the other to the brush adapter, wherein the brush adapter is intended for being fitted in the arm terminal, which is characterised in that the arm terminal is a guide having a U-shaped cross-section, such that two lateral walls joined on the upper part by a wall are defined, said guide being closed on one end by means of a stop, wherein the lower edge of the walls has guide and retention flanges and the input end of the walls has corresponding openings, wherein the brush adapter is a U-shaped profile intended for being housed in the arm terminal guide, the lateral walls of the brush adapter having corresponding grooves which are complementary to the flanges and an elastic protrusion disposed on the end of the walls complementary to the openings.

According to various optional characteristics of the assembly:
- the coupling is a U-shaped profile intended for being housed in the interior of the U-shaped profile of the brush adapter, such that two lateral walls and one joining wall are defined, wherein the lateral walls are joined in the centre by a pin and the brush adapter has, between its lateral walls, a coupling groove for coupling the pin.
- the coupling groove has a cylindrical envelope, wherein the angle subtended by the cylindrical part is greater than 180°, such as to define an input mouth for the pin having a diameter narrower than the pin, such as to constitute a reversible clipping system;
- the grooves of the brush adapter walls are continuous or discontinuous;
- the coupling comprises four flanges that extend from the edges of the joint between the lateral walls and the joining wall, in a direction opposite that of the walls, such as to enable blocking of the translation of the bow by means of the central lateral protrusions; and
- the flanges are folded by their ends, such as to enable the retention and fixation of the bow according to its coupling direction in the coupling.

Lastly, the arm terminal comprises, on the upper part thereof, a reception housing for a supplier nozzle.

### Brief description of the drawings

In order to better understand the foregoing, a set of drawings is attached which, schematically and by way of non-limiting example only, represent a practical case of embodiment.
Figure 1 shows a highly schematic elevational side view that shows the structure of the layers of the product obtained according to the invention.
Figure 2 shows the position of the twill layers in the autoclave. The directions of curvature are shown in this figure.
Figure 3 shows a perspective view of the semi-product obtained before cutting.
Figure 4 shows the approximate cutting lines.
Figure 5 shows a plan view of the bow obtained after cutting, wherein the lateral flanges are left for the arm-brush coupling system.

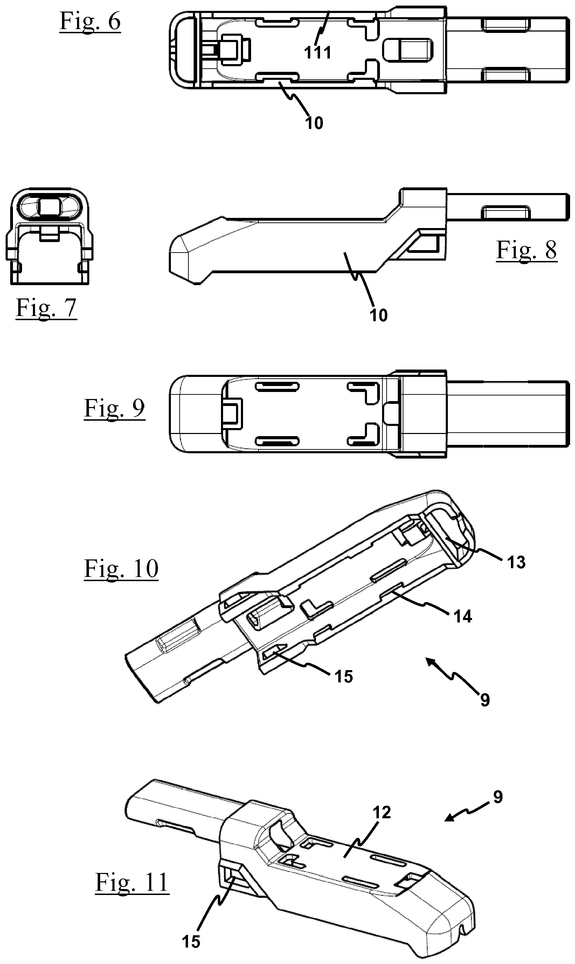

Figure 6 shows a bottom plan view of the end of the arm.
Figure 7 shows an elevational front view of the end of the arm, wherein the U-shaped profile can be observed.
Figure 8 shows an elevational side view of the end of the arm.
Figure 9 shows a top plan view of the end of the arm.
Figures 10 and 11 show bottom and top plan views of the end of the arm.

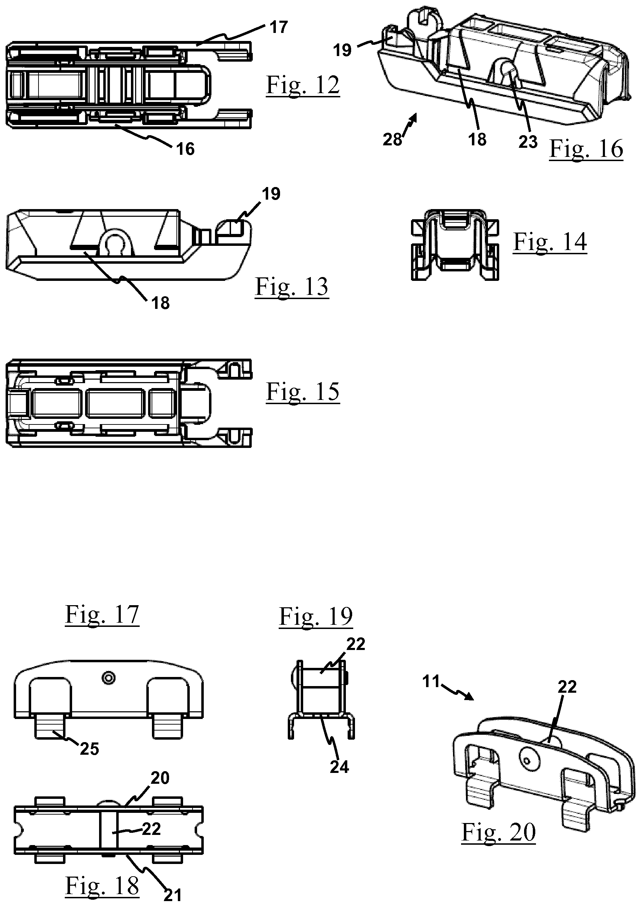

Figure 12 shows a bottom plan view of the brush adapter.
Figure 13 shows an elevational side view of the brush adapter.
Figure 14 shows an elevational front view of the brush adapter, wherein the U-shaped profile can be observed.
Figure 15 shows a top plan view of the brush adapter.
Figure 16 shows a perspective view of the brush adapter.
Figure 17 shows an elevational side view of the brush coupling.
Figure 18 shows a plan view of the brush coupling.
Figure 19 shows a front view of the brush coupling.
Figure 20 shows a perspective view of the brush coupling.
Figure 21 shows the brush adapter and coupling prior to the coupling and the direction of coupling.
Figure 22 shows the end of the arm above and the brush coupling below, coupled to each other, and the direction of proximity therebetween.
Figure 23 shows the assembly of figure 22 once all the parts have been coupled according to the direction of proximity, but prior to the final coupling by translation according to the lateral guiding.
Figure 24 is identical to figure 23, but showing an elevational view.
Figure 25 shows the assembly completely coupled.
Figure 26 shows the assembly completely coupled, to which the supplier nozzle has been added.

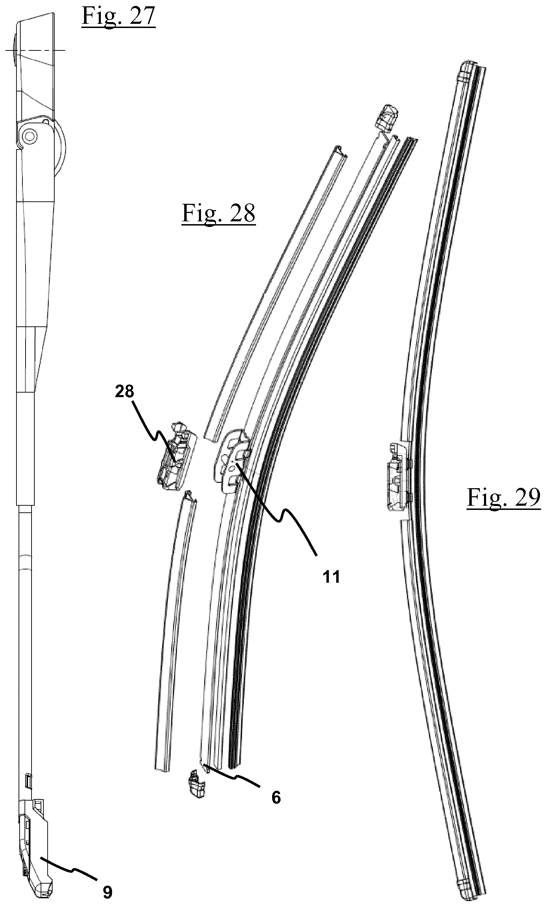

Figure 27 shows the arrangement of the arm end on the arm.
Figure 28 shows an exploded view of the different parts of the brush.
Figure 29 shows an overall view wherein the brush is represented mounted with the coupling and the adapter.

### Description of a preferred embodiment

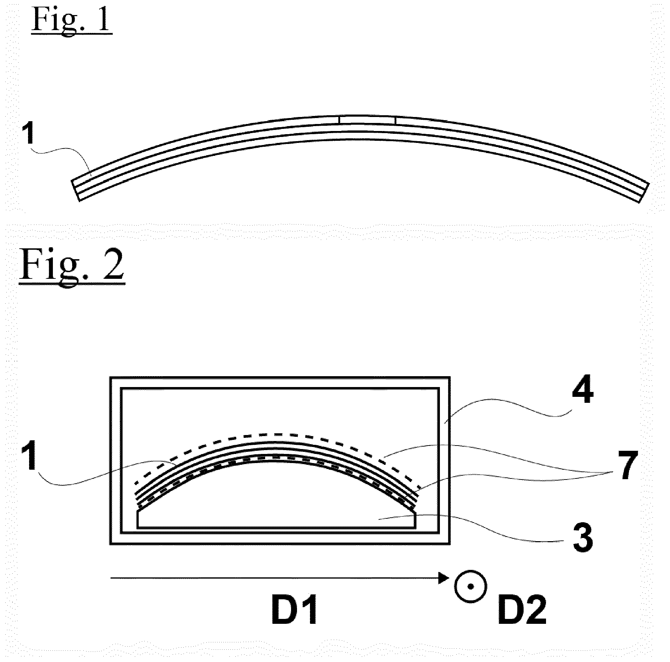

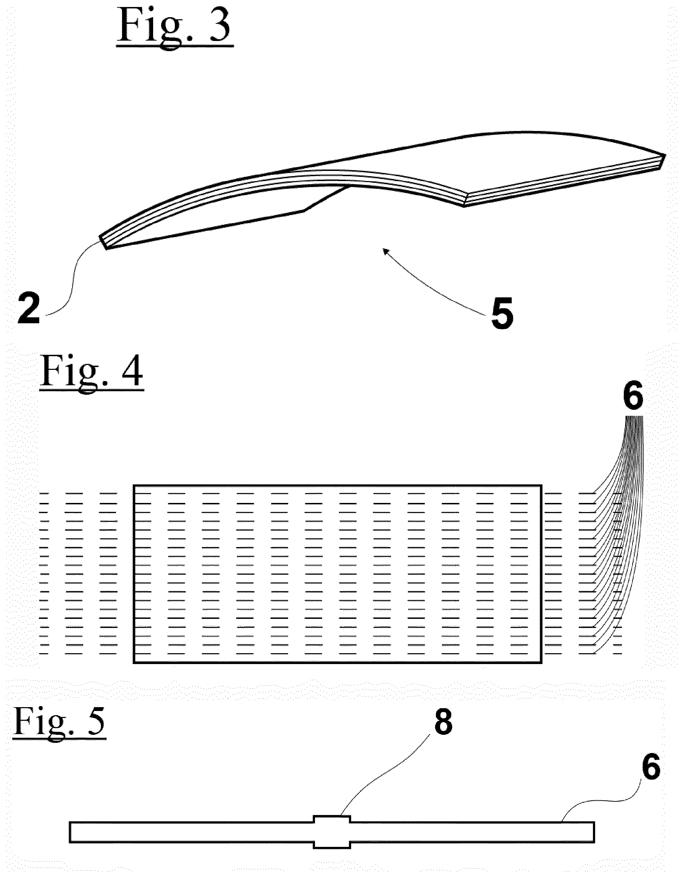

As can be observed in the figures, the invention relates to a method for manufacturing bows 1 for windshield wipers, which comprises the stages of:
- Arranging a plurality of layers of fibreglass twill fabric pre-impregnated with epoxy resin 2 in the lower mould 3 of an autoclave 4, wherein the lower mould 3 is a curved surface according to a first of the horizontal directions D1, such that this surface has a constant cross-section when seen from the other horizontal direction D2 perpendicular to the first direction D1, both illustrated in figure 2;
- Performing a thermocompression operation in the autoclave 4 to obtain a semi-product 5 of composite material arranged in layers 2, illustrated in figure 3;
- Removing the semi-product 5 from the autoclave 4;
- Cutting the semi-product 5 in directions parallel to the direction of curvature D1 of the semi-product 5 as shown in figure 4, to obtain a plurality of flexors 6 such as those shown in figure 5.

According to a particularly preferred embodiment of the method, thermocompression occurs at a temperature comprised between 65°C and 140°C, the fibreglass twill fabric is 2x2 twill with 300 and 600 tex filaments, with a weight comprised between 0.06 mm and 0.8 mm, and the fibreglass twill fabric comes from a roll having a width greater than 1 m.

The epoxy resin is a low-viscosity epoxy matrix with low curing temperature.

Prior to disposing the fabric and the resin and after having arranged them, corresponding anti-adherent plastic sheets 7 are arranged to facilitate removal after the thermocompression stage.

In the cutting stage, which is preferably carried out using a diamond bur, central lateral protrusions 8 are left for fixing the bow to a windshield wiper brush support.

The invention also relates to a method for manufacturing a bow-windshield wiper rubber support assembly which comprises manufacturing a bow using a method according to any of the aforementioned variants and which comprises bonding the bow to a windshield wiper rubber support profile, preferably by means of a two-sided adhesive tape.

This two-sided adhesive tape has three layers: a first acrylic adhesive layer, an internal acrylic viscoelastic layer and a second acrylic adhesive layer, wherein the first layer is intended for being joined to the bow and the second layer is intended for being joined to the support profile. Very advantageously, the adhesive tape is a viscoelastic acrylic foam tape.

Advantageously, before performing the bonding with the two-sided adhesive tape, an adhesion promoter, which is an isopropyl alcohol solution, is applied to the surfaces to be bonded.

The invention also relates to a windshield wiper arm terminal 9, brush adapter 10 and coupling 11 assembly, wherein the coupling is intended for being coupled on one side to the bow 6 and to the brush adapter 28 on the other, wherein the brush adapter 28 is intended for fitting in the arm terminal 9, characterised in that the arm terminal 9 is a U-shaped guide, such that two lateral walls 10, 111 are defined, joined at the top by a wall 12, wherein the guide is closed at one end by a stop 13 and wherein the lower edge of the walls 10, 111 have guide and retention flanges 14 and the input end of the walls of corresponding openings 15, wherein the brush adapter 28 is a U-shaped profile intended for being housed in the guide of the arm terminal 9, wherein the lateral walls 16, 17 of the brush adapter 28 have corresponding grooves 18 complementary to the flanges 14 and an elastic protrusion 19 arranged at the end of the walls 16,17 complementary to the openings 15.

The coupling 11 is U-shaped profile intended for being housed in the interior of the U-shaped profile of the brush adapter 28, such that two lateral walls 20, 21 and a joining wall 24 are defined, the lateral walls 20, 21 being joined in the centre by a pin 22, wherein the brush adapter 28 has, between its lateral walls 16, 17, a coupling groove 23 for the pin 22.

The coupling groove 23 has a cylindrical envelope, the angle subtended by the cylindrical part being greater than 180°, such that it defines an input mouth of the pin 22 of a diameter narrower than the pin 22, such as to constitute a reversible clipping system.

The grooves 18 of the walls 16, 17 of the brush adapter 28 are continuous or discontinuous.

The coupling 11 comprises four flanges 25 that extend from the joining edges between the lateral walls 20, 21 and the joining wall 24, in a direction opposite that of the walls 20, 21, such as to enable blocking of the bow 6 during translation by means of the central lateral protrusions 8.

The flanges 25 are folded by their ends, such that they make it possible to retain and fix the bow 6 in their coupling direction in the coupling 11.

The arm terminal 9 comprises a reception housing 26 for a supplier nozzle 27, on its upper part.

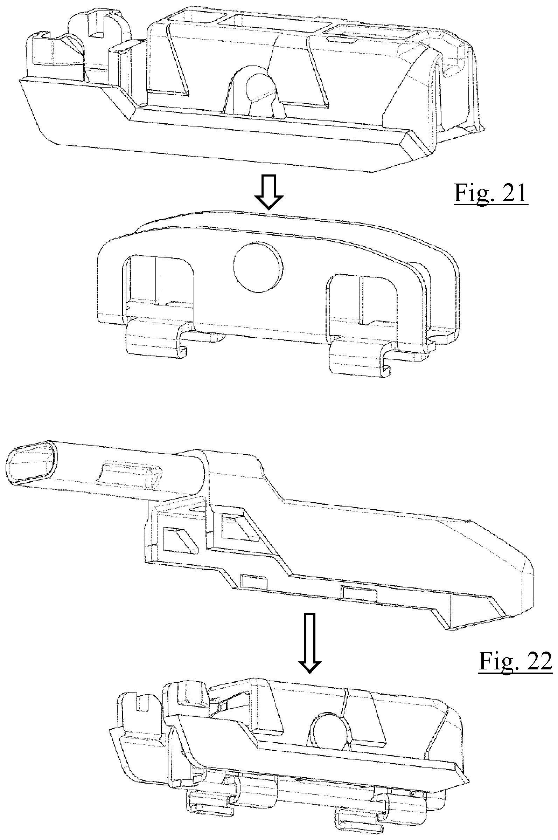

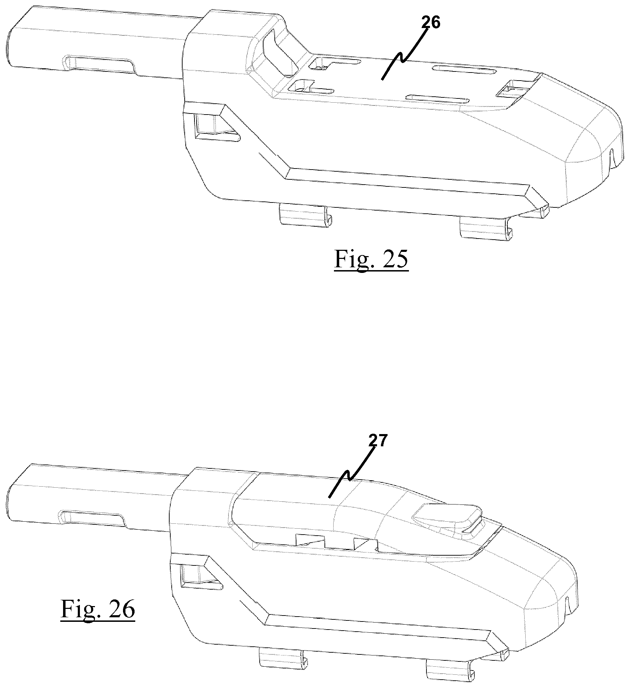

The coupling of the different parts of the assembly is shown in figures 21 to 26. Firstly, in figure 21, the adapter 10 and the coupling 11 are coupled, in the indicated direction, until the pin 22 is introduced in the groove 23, whose dovetail-shaped opening enables reversible coupling. The subset illustrated at the bottom of figure 22 is then obtained. After this first phase, the two parts involved have a certain movement, such that the coupling can pivot with respect to the adapter, so that the brush can pivot in turn and adapt to the windshield.

Next, as shown in this figure 22, they approximate to the subset obtained and the end of the arm until reaching the edge of the lateral walls of the end of the arm 9 resting on lateral protrusions of the adapter 28. A translation is then performed in the direction of the inner grooves of said lateral walls, until the elastic flanges 19 are introduced in the openings 15.

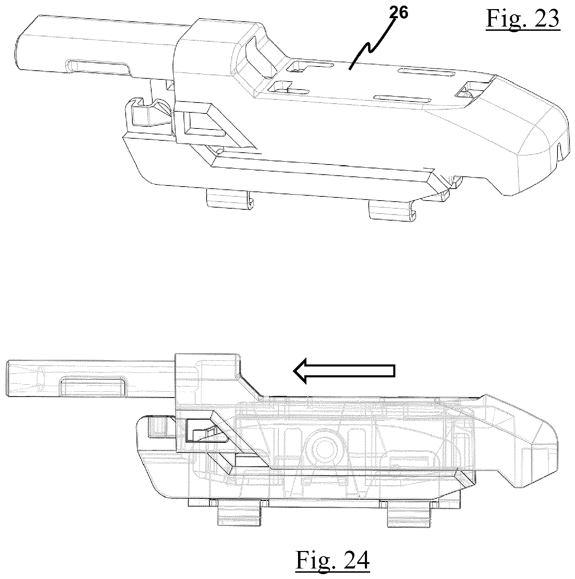

The assembled subset illustrated in figure 23 is thus obtained. Lastly, it is fixed to the top of the end of the arm 9 of a supplier nozzle 27.

The fixation obtained is very robust, due to the length of the coupling guide between the parts. All the details of the coupling have been designed to avoid the weak parts of the couplings of the state of the art.

Also, the coupling assembly of the invention is especially well adapted to the bow obtained by means of the method claimed, since bows or flexors of great length can be obtained by means of this process, which imply high forces and high torques.

Despite the fact that reference has been made to a specific embodiment of the invention, it is evident for a person skilled in the art that the methods and assembly described are susceptible of many variations and changes, and that all the aforementioned details may be replaced by other, technically equivalent ones, without departing from the scope of protection defined by the attached claims.

## Claims

1. A method for manufacturing windshield wiper bows (1), which comprises the stages of:
- arranging a plurality of layers (2) of fibreglass twill fabric pre-impregnated with epoxy resin in the lower mould (3) of an autoclave (4), wherein the lower mould (3) is a curved surface according to a first horizontal directions (D1), such that this surface has a constant section when seen from another horizontal direction (D2) perpendicular to the first direction (D1);
- carrying out a thermocompression operation in the autoclave (4) to obtain a semi-product (5) made from composite material arranged in layers (2);
- removing the semi-product (5) from the autoclave (4); and
- cutting the semi-product (5) in directions parallel to the direction of curvature (D1) of the semi-product (5) to obtain a plurality of flexors (6).

2. The method, according to claim 1, wherein thermocompression is carried out at a temperature comprised between 65ºC and 140ºC.

3. The method, according to any of the two preceding claims, wherein the fibreglass twill fabric is 2x2 twill with 300 and 600 tex filaments, having a weight comprised between 300 and 600 g/m² and a thickness comprised between 0.06 and 0.8 mm.

4. The method, according to any of the preceding claims, wherein the fibreglass twill fabric comes from a roll having a width greater than 1 m.

5. The method, according to any of the preceding claims, wherein the epoxy resin is a low-viscosity epoxy matrix system with a low curing temperature.

6. The method, according to any of the preceding claims, wherein prior to arranging the fabric and the resin and after having arranged them, corresponding anti-adherent plastic sheets (7) are arranged to facilitate removal after the thermocompression stage.

7. The method, according to any of the preceding claims, wherein central lateral protrusions (8) are left in the cutting stage for fixing the bow to a windshield wiper brush support.

8. The method, according to any of the preceding claims, wherein the cutting stage is carried out using a diamond bur.

9. A method for manufacturing an assembly of a windshield bow-wiper rubber support profile, which comprises manufacturing a bow using the method according to any of the preceding claims, and which comprises bonding the bow to a windshield wiper rubber support profile.

10. The method, according to the preceding claim, wherein said bonding is made by means of two-sided adhesive tape.

11. The method, according to the preceding claim, wherein the two-sided adhesive tape has three layers: a first layer of acrylic adhesive, an inner layer of acrylic viscoelastic and a second layer of acrylic adhesive, wherein the first layer is intended for being bonded to the bow and the second layer is intended for being bonded to the support profile.

12. The method, according to the preceding claim, wherein the adhesive tape is a viscoelastic acrylic foam tape.

13. The method, according to any of the three preceding claims, wherein prior to performing the bonding using two-sided adhesive tape an adhesion promoter is applied to the surfaces to be bonded together.

14. The method, according to the preceding claim, wherein the adhesion promoter is an isopropyl alcohol solution.

15. An assembly comprising a windshield wiper arm terminal (9), a brush adapter (28), a windshield wiper bow (6), and a coupling (11), wherein the coupling (11) is intended for being coupled to the windshield wiper bow (6) on one side and to the brush adapter (28) on the other, the brush adapter (28) being intended for fitting in the wiper arm terminal (9), wherein the wiper arm terminal (9) is a guide having a U-shaped cross-section, such that two lateral walls (10, 111) are defined, joined at the top by a wall (12), the guide being closed by one end by means of a stop (13), the lower edge of the two lateral walls (10, 111) having guide and retention flanges (14) and the input end of the two lateral walls (10, 111) having corresponding openings (15), wherein the brush adapter (28) is a U-shaped profile intended for being housed in the wiper arm terminal guide (9), the lateral walls (16, 17) of the brush adapter (28) having corresponding grooves (18) complementary to the flanges (14) and an elastic protrusion (19) arranged at the end of the walls (16, 17) complementary to the openings (15), and wherein in the windshield wiper bow (6) has been manufactured according to the method of claim 1.

16. An assembly according to claim 15, wherein the coupling (11) is a U-shaped profile intended for being housed inside the U-shaped profile of the brush adapter (28), such that two lateral walls (20, 21) and a joining wall (24) are defined, wherein the lateral walls (20, 21) are joined in the centre by a pin (22) and the brush adapter (28) has, between its lateral walls (16, 17), a coupling groove (23) for coupling the pin (22)

17. An assembly, according to claim 16, wherein the coupling groove (23) has a cylindrical envelope, wherein the angle subtended by the cylindrical part is greater than 180ºC, such as to define an input mouth for the pin (22) of a narrower diameter than the pin (22), such that a reversible clipping system is constituted.

18. An assembly, according to any of claims 15 to 17, wherein the grooves (18) of the walls (16, 17) of the brush adapter (28) are continuous or discontinuous.

19. An assembly, according to claim 16, wherein the coupling (11) comprises four flanges (25) that extend from the joint edges between the lateral walls (20, 21) and the joining wall (24), in a direction opposite that of the walls (20, 21), such as to enable blocking of the bow (6) during translation by means of the central lateral protrusions (8).

20. An assembly, according to claim 19, wherein the flanges (25) are folded by their ends, such that they allow the retention and fixation of the bow (6) in their coupling direction in the coupling (11).

21. An assembly, according to any of claims 15 to 20, wherein the arm terminal (9) comprises a reception housing (26) for a supplier nozzle (27), on its upper part.

## Patentansprüche

1. Ein Verfahren zum Herstellen von Scheibenwischerbügeln (1), das folgende Schritte aufweist:
- Anordnen einer Mehrzahl von Schichten (2) eines Glasfaser-Twill-Gewebes, das mit Epoxidharz vorimprägniert ist, in der unteren Form (3) eines Autoklavs (4), wobei die untere Form (3) eine gekrümmte Oberfläche gemäß einer ersten horizontalen Richtung (D1) ist, derart, dass diese Oberfläche bei Betrachtung aus einer anderen horizontalen Richtung (D2) senkrecht zu der ersten Richtung (D1) einen konstanten Schnitt aufweist;
- Ausführen eines Thermokompressionsvorgangs in dem Autoklav (4), um ein Semi-Produkt (5) zu erhalten, das aus einem Verbundmaterial hergestellt ist, das in Schichten (2) angeordnet ist;
- Entfernen des Semi-Produkts (5) aus dem Autoklav (4); und
- Schneiden des Semi-Produkts (5) in Richtungen parallel zu der Richtung einer Krümmung (D1) des Semi-Produkts (5), um eine Mehrzahl von Beugeelementen (6) zu erhalten.

2. Das Verfahren gemäß Anspruch 1, bei dem die Thermokompression bei einer Temperatur ausgeführt wird, die zwischen 65°C und 140°C beträgt.

3. Das Verfahren gemäß einem der beiden vorherigen Ansprüche, bei dem das Glasfaser-Twill-Gewebe 2x2-Twill mit 300 und 600 Tex-Filamenten, mit einem Gewicht zwischen 300 und 600 g/m² und einer Dicke zwischen 0,06 und 0,8 mm ist.

4. Das Verfahren gemäß einem der vorherigen Ansprüche, bei dem das Glasfaser-Twill-Gewebe von einer Rolle mit einer Breite von mehr als 1 m kommt.

5. Das Verfahren gemäß einem der vorherigen Ansprüche, bei dem das Epoxidharz ein Epoxidmatrix-System mit geringer Viskosität mit einer niedrigen Aushärtungstemperatur ist.

6. Das Verfahren gemäß einem der vorherigen Ansprüche, bei dem vor dem Anordnen des Gewebes und des Harzes und nach dem Anordnen derselben entsprechende Anti-Haft-Kunststofflagen (7) angeordnet werden, um eine Entfernung nach dem Thermokompressionsschritt zu erleichtern.

7. Das Verfahren gemäß einem der vorherigen Ansprüche, bei dem mittlere seitliche Vorsprünge (8) bei dem Schneideschritt zum Fixieren des Bügels an einem Scheibenwischerbürstenträger stehen bleiben.

8. Das Verfahren gemäß einem der vorherigen Ansprüche, bei dem der Schneideschritt unter Verwendung eines Diamantbohrers ausgeführt wird.

9. Ein Verfahren zum Herstellen einer Anordnung eines Scheiben-Bügel-Wischer-Gummiträgerprofils, das ein Herstellen eines Bügels unter Verwendung des Verfahrens gemäß einem der vorherigen Ansprüche aufweist und das ein Verbinden des Bügels mit einem Scheibenwischer-Gummiträgerprofil aufweist.

10. Das Verfahren gemäß dem vorherigen Anspruch, bei dem das Verbinden mittels eines doppelseitigen Klebebands ausgeführt wird.

11. Das Verfahren gemäß dem vorherigen Anspruch, bei dem das doppelseitige Klebeband drei Schichten aufweist: eine erste Schicht aus Acrylkleber, eine innere Schicht aus einem viskoelastischen Acrylmaterial und eine zweite Schicht aus Acrylkleber, wobei die erste Schicht zur Verbindung mit dem Bügel dient und die zweite Schicht zur Verbindung mit dem Trägerprofil dient.

12. Das Verfahren gemäß dem vorherigen Anspruch, bei dem das Klebeband ein viskoelastisches Acrylschaumband ist.

13. Das Verfahren gemäß einem der drei vorherigen Ansprüche, bei dem vor dem Durchführen des Verbindens unter Verwendung des doppelseitigen Klebebands ein Haftverstärker auf die miteinander zu verbindenden Oberflächen aufgetragen wird.

14. Das Verfahren gemäß dem vorherigen Anspruch, bei dem der Haftverstärker eine Isopropylalkohollösung ist.

15. Eine Anordnung mit einem Scheibenwischerarm-Anschlussstück (9), einem Bürstenadapter (28), einem Scheibenwischerbügel (6) und einem Koppelelement (11), wobei das Koppelelement (11) zur Kopplung mit dem Scheibenwischerbügel (6) an einer Seite und mit dem Bürstenadapter (28) an der anderen dient, wobei der Bürstenadapter (28) zum Passen in das Wischerarmanschlussstück (9) dient, wobei das Wischerarmanschlussstück (9) eine Führung mit einem U-förmigen Querschnitt ist, derart, dass zwei Seitenwände (10, 111) definiert werden, die an der Oberseite durch eine Wand (12) verbunden sind, wobei die Führung an einem Ende mittels eines Anschlags (13) geschlossen wird, der untere Rand der beiden Seitenwände (10, 111) Führungs- und Halteflansche (14) aufweist und das Eingangsende der beiden Seitenwände (10, 111) entsprechende Öffnungen (15) aufweist, wobei der Bürstenadapter (28) ein U-förmiges Profil ist, das zur Unterbringung in der Wischerarmanschlussstückführung (9) dient, die Seitenwände (16, 17) des Bürstenadapters (28) entsprechende Rillen (18) aufweisen, die komplementär zu den Flanschen (14) sind, und ein elastischer Vorsprung (19) an dem Ende der Wände (16, 17) komplementär zu den Öffnungen (15) angeordnet ist, und wobei der Scheibenwischerbügel (6) gemäß dem Verfahren gemäß Anspruch 1 hergestellt wurde.

16. Eine Anordnung gemäß Anspruch 15, bei der das Koppelelement (11) ein U-förmiges Profil ist, das zur Unterbringung innerhalb des U-förmigen Profils des Bürstenadapters (28) dient, derart, dass zwei Seitenwände (20, 21) und eine Verbindungswand (24) definiert sind, wobei die Seitenwände (20, 21) in der Mitte durch einen Stift (22) verbunden sind und der Bürstenadapter (28) zwischen seinen Seitenwänden (16, 17) eine Kopplungsrille (23) zum Koppeln mit dem Stift (22) aufweist.

17. Eine Anordnung gemäß Anspruch 16, bei der die Kopplungsrille (23) eine zylindrische Hülle aufweist, wobei der Winkel, der durch den zylindrischen Teil aufgespannt wird, größer als 180°C ist, um so eine Eingangsmündung für den Stift (22) mit einem schmaleren Durchmesser als der Stift (22) zu definieren, derart, dass ein umkehrbares Klemmsystem gebildet wird.

18. Eine Anordnung gemäß einem der Ansprüche 15 bis 17, bei der die Rillen (18) der Wände (16, 17) des Bürstenadapters (28) durchgehend oder unterbrochen sind.

19. Eine Anordnung gemäß Anspruch 16, bei der das Koppelelement (11) vier Flansche (25) aufweist, die sich von den Verbindungsrändern zwischen den Seitenwänden (20, 21) und der Verbindungswand (24) in einer Richtung entgegengesetzt zu derjenigen der Wände (20, 21) erstrecken, um so ein Blockieren des Bügels (6) während einer Verschiebung mittels der mittleren seitlichen Vorsprünge (8) zu ermöglichen.

20. Eine Anordnung gemäß Anspruch 19, bei der die Flansche (25) an ihren Enden derart gefaltet sind, dass sie das Halten und die Fixierung des Bügels (6) in ihrer Kopplungsrichtung in dem Koppelelement (11) ermöglichen.

21. Eine Anordnung gemäß einem der Ansprüche 15 bis 20, bei der das Armanschlussstück (9) ein Aufnahmegehäuse (26) für eine Versorgungsdüse (27) an seinem unteren Teil aufweist.

## Revendications

1. Procédé de fabrication de fixations d'essuie-glaces de pare-brise (1), qui comprend les étapes qui consistent à :
- placer une pluralité de couches (2) de tissu croisé de fibre de verre pré-imprégné avec une résine d'époxy dans le moule inférieur (3) d'un autoclave (4), dans lequel le moule inférieur (3) est une surface incurvée selon une première direction horizontale (D1), de sorte que cette surface présente une section constante lorsqu'elle est vue depuis une autre direction horizontale (D2) perpendiculaire à la première direction (D1) ;
- exécuter une opération de thermocompression dans l'autoclave (4) afin d'obtenir un semi-produit (5) en matériau composite disposé en couches (2) ;
- retirer le semi-produit (5) de l'autoclave (4) ; et
- découper le semi-produit (5) dans des directions parallèles à la direction de courbure (D1) du semi-produit (5) afin d'obtenir une pluralité de fléchisseurs (6).

2. Procédé selon la revendication 1, dans lequel la thermocompression est effectuée à une température comprise entre 65°C et 140°C.

3. Procédé selon l'une quelconque des deux revendications précédentes, dans lequel le tissu croisé de fibre de verre est un tissu croisé de 2x2 avec 300 et 600 filaments textiles, ayant un poids compris entre 300 et 600 g/m² et une épaisseur comprise entre 0,06 et 0,8 mm.

4. Procédé selon l'une quelconque des revendications précédentes, dans lequel le tissu croisé de fibre de verre provient d'un rouleau ayant une largeur supérieure à 1 m.

5. Procédé selon l'une quelconque des revendications précédentes, dans lequel la résine d'époxy est un système de matrice d'époxy à faible viscosité qui présente une température de durcissement basse.

6. Procédé selon l'une quelconque des revendications précédentes, dans lequel, avant de placer le tissu et la résine et après les avoir placés, des feuilles de plastique anti-adhésion correspondantes (7) sont disposées afin de faciliter le retrait après l'étape de thermocompression.

7. Procédé selon l'une quelconque des revendications précédentes, dans lequel des saillies latérales centrales (8) sont laissées à l'étape de découpe afin de fixer la fixation sur un support d'essuie-glace de pare-brise.

8. Procédé selon l'une quelconque des revendications précédentes, dans lequel l'étape de découpe est effectuée à l'aide d'une fraise à diamant.

9. Procédé de fabrication d'un ensemble de profilé de support en caoutchouc destiné à une fixation d'essuie-glace de pare-brise, qui comprend la fabrication d'une fixation à l'aide du procédé selon l'une quelconque des revendications précédentes, et qui comprend le raccordement de la fixation à un profilé de support en caoutchouc destiné à un essuie-glace de pare-brise.

10. Procédé selon la revendication précédente, dans lequel ledit raccordement est effectué à l'aide d'une bande adhésive à double face.

11. Procédé selon la revendication précédente, dans lequel la bande adhésive à double face possède trois couches : une première couche d'adhésif acrylique, une couche interne de viscoélastique acrylique, et une seconde couche d'adhésif acrylique, dans lequel la première couche est destinée à être reliée à la fixation et la seconde couche est destinée à être reliée au profilé de support.

12. Procédé selon la revendication précédente, dans lequel la bande adhésive est une bande de mousse acrylique viscoélastique.

13. Procédé selon l'une quelconque des revendications précédentes, dans lequel, avant d'effectuer le raccordement à l'aide de la bande adhésive à double face, un promoteur d'adhésion est appliqué sur les surfaces à relier entre elles.

14. Procédé selon la revendication précédente, dans lequel le promoteur d'adhésion est une solution d'alcool isopropylique.

15. Ensemble comprenant une extrémité de gras d'essuie-glace de pare-brise (9), un adaptateur de brosse (28), une fixation d'essuie-glace de pare-brise (6), et un accouplement (11), dans lequel l'accouplement (11) est destiné à être relié à la fixation d'essuie-glace de pare-brise (6) sur un côté et à l'adaptateur de brosse (28) de l'autre côté, l'adaptateur de brosse (28) étant destiné à être placé dans l'extrémité de bras d'essuie-glace (9), dans lequel l'extrémité de gras d'essuie-glace (9) est un guide ayant une section transversale en forme de U, de sorte que deux parois latérales (10, 111) soient définies, jointes par une paroi (12) au niveau de la partie supérieure, le guide étant fermé à une extrémité par une butée (13), le bord inférieur des deux parois latérales (10, 111) ayant des brides de guidage et de retenue (14) et l'extrémité d'entrée des deux parois latérales (10, 111) ayant des ouvertures correspondantes (15), dans lequel l'adaptateur de brosse (28) est un profilé en forme de U destiné à être contenu dans le guide d'extrémité de bras d'essuie-glace (9), les parois latérales (16, 17) de l'adaptateur de brosse (28) ayant des rainures correspondantes (18) complémentaires aux brides (14) et une saillie élastique (19) prévue à l'extrémité des parois (16, 17) complémentaires aux ouvertures (15), et dans lequel la fixation d'essuie-glace de pare-brise (6) a été fabriquée selon le procédé selon la revendication 1.

16. Ensemble selon la revendication 15, dans lequel le couplage (11) est un profilé en forme de U destiné à être contenu dans le profilé en forme de U de l'adaptateur de brosse (28), de sorte que deux parois latérales (20, 21) et une paroi de jonction (24) soient définies, dans lequel les parois latérales (20, 21) sont jointes au centre par une broche (22) et l'adaptateur de brosse (28) possède, entre ses parois latérales (16, 17), une rainure de couplage (23) destinée à coupler la broche (22).

17. Ensemble selon la revendication 16, dans lequel la rainure de couplage (23) possède une enveloppe cylindrique, dans lequel l'angle sous-tendu par la partie cylindrique est supérieur à 180°C, de façon à définir un embout d'entrée pour la broche (22) d'un diamètre inférieur à la broche (22), de sorte qu'un système d'ébarbage réversible soit constitué.

18. Ensemble selon l'une quelconque des revendications 15 à 17, dans lequel les rainures (18) des parois (16, 17) de l'adaptateur de brosse (28) sont continues ou discontinues.

19. Ensemble selon la revendication 16, dans lequel le couplage (11) comprend quatre brides (25) qui s'étendent depuis les bords de jonction entre les parois latérales (20, 21) et la paroi de jonction (24), dans une direction opposée à celle des parois (20, 21), de façon à permettre le blocage de la fixation (6) pendant la translation à l'aide des saillies latérales centrales (8).

20. Ensemble selon la revendication 19, dans lequel les brides (25) sont pliées par leurs extrémités, de façon à permettre la retenue et la fixation de la fixation (6) dans leur direction de couplage au sein du couplage (11).

21. Ensemble selon l'une quelconque des revendications 15 à 20, dans lequel l'extrémité de bras (9) comprend un logement de réception (26) destiné à une buse d'alimentation (27), sur sa partie supérieure.
